# FASCICULE DE BREVET EUROPEEN

(11) **EP 1 963 705 B1**
(45) Date de publication et mention de la délivrance du brevet: **07.10.2009**
(21) Numéro de dépôt: 06841490.3
(22) Date de dépôt: 20.12.2006
(51) Int. Cl.: F16F 9/12, F16F 9/53

(54) **DISPOSITIF D'AMORTISSEMENT**
DÄMPFER
DAMPER

(30) Priorité: 21.12.2005 FR 0513024
(43) Date de publication de la demande: 03.09.2008
(73) Titulaire: Thales, 92526 Neuilly Sur Seine (FR)
(72) Inventeur: IDE, Monique, F-41130 Villechauve (FR); THOMAS, Dominique, F-41100 Areines (FR); ROBERGE,Philippe, F-92130 Issy Les Moulineaux (FR)
(74) Mandataire: Collet, Alain
(86) Numéro de dépôt international: PCT/EP2006/069976
(87) Numéro de publication internationale: WO 2007/071709

(56) Documents cités:
- EP-A- 0 326 477
- EP-A- 1 319 863
- PATENT ABSTRACTS OF JAPAN vol. 016, no. 057 (M-1210), 13 février 1992 (1992-02-13) -& JP 03 255220 A (OSAKA SHINKU KIKI SEISAKUSHO:KK), 14 novembre 1991 (1991-11-14)

## Description

L'invention concerne un dispositif d'amortissement. L'invention trouve une utilité particulière dans l'amortissement du mouvement d'une sonde d'incidence mobile pour aéronef. La connaissance de l'incidence d'un aéronef par rapport à l'air qui l'entoure est capitale pour la sécurité du vol notamment aux basses vitesses par exemple pour détecter un éventuel décrochage de l'aéronef. On connaît deux types de sondes d'incidence mobiles. Les sondes à girouettes comportent une partie mobile placée sur la peau de l'aéronef et destinée à s'orienter dans l'axe du vent. Les sondes multifonctions mobiles, plus récentes, comportent des prises de pression disposées sur la partie mobile. Les sondes multifonctions permettent de déterminer en plus de l'incidence, la pression totale et la pression statique du vent. Les sondes multifonctions mobiles ont une inertie plus importante que les sondes à girouettes. Le temps de réponse de ces sondes doit être court et la sonde doit être bien amortie pour éviter les dépassements voire les oscillations afin d'éviter une détection intempestive de décrochage. Par exemple, certains avions militaires possèdent un armement disposé en "pod", c'est à dire sous les ailes de l'avion. Le tir de cet armement crée des perturbations aérodynamiques importantes. En effet, le sillage lors du tir représente un échelon d'incidence important pour les sondes de l'avion. Un mauvais amortissement risque de mettre en butée et d'endommager la partie mobile des sondes. La qualité de l'amortissement est d'autant plus critique que la masse de la partie mobile de la sonde est importante. L'invention trouvera donc une application particulièrement intéressante pour les sondes multifonctions dont les parties mobiles sont plus lourdes que celle des sondes à girouettes.

Pour amortir le mouvement de la partie mobile des sondes, trois principes d'amortissement sont connus :
L'amortissement pneumatique à laminage d'air. Ce principe est coûteux et encombrant car mécaniquement complexe à mettre en oeuvre. De plus la pollution de l'air diminue sa fiabilité.
L'amortissement électromagnétique. Ce principe est très fiable quelle que soit la température de la sonde. En revanche, il a un faible coefficient d'amortissement, il est encombrant, coûteux dans sa mise en oeuvre. De plus il possède une inertie importante.
L'amortissement fluide. Ce principe est peu encombrant et peu coûteux à mettre en oeuvre. Son inertie est faible. En revanche, l'amortissement qu'il procure est très variable en fonction de la température. Sa mise en oeuvre nécessite donc souvent une ambiance thermostatée.

L'invention vise à pallier les défauts des amortisseurs décrits précédemment en couplant un amortisseur électromagnétique et un frein utilisant un fluide magnéto- ou électro-rhéologique tel que par exemple décrit dans le brevet US. 6 547 986 de manière à créer un amortisseur visqueux. Du document EP 1 319 863 A1 est connu un dispositif selon le préambule de la revendication 1.

A cet effet, l'invention a pour objet un dispositif d'amortissement du mouvement d'un équipage mobile par rapport à un équipage fixe, le dispositif comportant des moyens pour générer un courant électrique évoluant avec la vitesse de déplacement de l'équipage mobile par rapport à l'équipage fixe, **caractérisé en ce qu**'il comporte en outre des moyens pour modifier des propriétés mécaniques d'un fluide situé entre l'équipage mobile et l'équipage fixe au moyen du courant électrique et en ce que les moyens pour générer un courant électrique comportent une génératrice comprenant un rotor et un stator, le rotor étant solidaire de l'équipage mobile et le stator étant solidaire de l'équipage fixe.

L'amortisseur électromagnétique forme la génératrice modifiant les propriétés mécaniques du fluide. Ainsi, le dispositif est autonome, il ne nécessite pas de source d'énergie extérieure pour fonctionner. C'est le mouvement de l'équipage mobile qui génère l'énergie nécessaire à la modification des propriétés mécaniques du fluide.

L'invention peut être mise en oeuvre pour amortir un mouvement oscillant ou pour freiner un mouvement non oscillant. L'invention est avantageusement mise en oeuvre dans un ralentisseur par exemple installé dans les véhicules poids lourd. En effet, la modification des propriétés mécaniques du fluide permet de créer des liaisons mécaniques entre l'équipage mobile et l'équipage fixe permettant de freiner l'équipage mobile en fonction de sa vitesse.

L'invention sera mieux comprise et d'autres avantages apparaîtront à la lecture de la description détaillée d'un mode de réalisation donné à titre d'exemple, description illustrée par le dessin joint dans lequel :
La figure 1 représente un dispositif tournant autour d'un axe, en coupe perpendiculaire à cet axe ;
la figure 2 représente le dispositif de la figure 1, en coupe dans un plan contenant l'axe de rotation.

Par souci de clarté, les mêmes éléments porteront les mêmes repères dans les différentes figures.

Le dispositif représenté sur les figures comporte un équipage mobile 1 en rotation autour d'un axe 2 par rapport à un équipage fixe 3. Le mouvement de rotation n'est donné qu'à titre d'exemple et il est bien entendu que l'invention peut être mise en oeuvre pour d'autres mouvements tel qu'un mouvement de translation. Dans l'exemple considéré l'équipage mobile est appelé rotor 1 et l'équipage fixe est appelé stator 3.

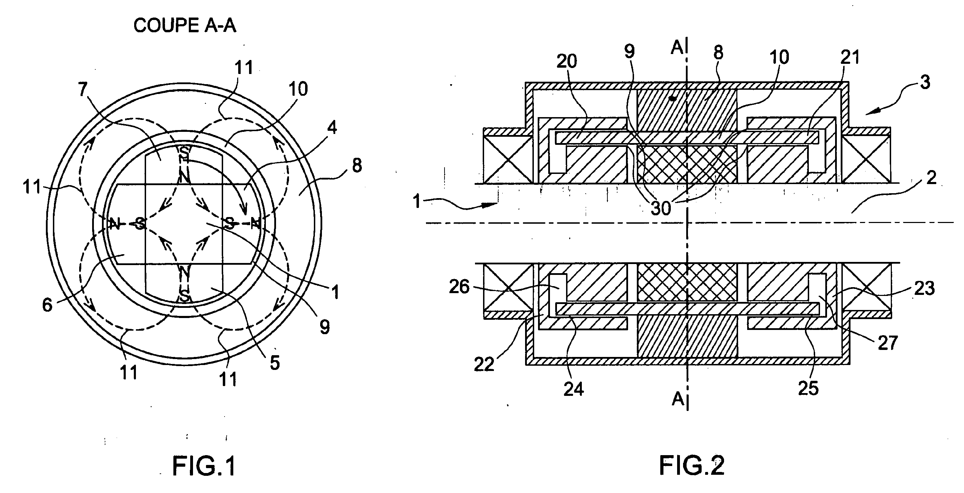

Le dispositif comporte des moyens pour générer un courant électrique évoluant avec la vitesse de déplacement du rotor 1 par rapport au stator 3. L'évolution du courant électrique est par exemple une évolution croissante de type proportionnelle à la vitesse. Plus précisément, le rotor 1 comporte au moins un aimant permanent. Dans l'exemple représenté, le rotor 1 comporte quatre aimants permanents 4 à 7. Les aimants 4 à 7 sont orientés radialement autour de l'axe 2. Le stator 3 comporte une carcasse magnétique 8 entourant les aimant 4 à 7. Les aimants 4 à 7 et la carcasse sont séparés par un entrefer 9 Une bague 10, solidaire de la carcasse 8 et réalisée en matériau amagnétique, est disposée dans l'entrefer 9. La bague 10 est réalisée dans un matériau conducteur de l'électricité tel que par exemple un alliage de cuivre. Les aimants 4 à 7 comportent chacun deux pôles notés N et S sur la figure 1. Les aimants 4 à 7 sont orientés de façon à ce que les potes se succèdent alternativement N puis S dans l'entrefer 9. Des lignes de champ magnétique 11 se forment entre deux pôles successifs dans l'entrefer 9. les lignes de champ magnétique 11 se referment par la carcasse 8 et par l'axe 1. Lors du mouvement du rotor 1 par rapport au stator 3, un courant électrique est généré dans la bague 10. Le courant électrique est proportionnel à la vitesse de rotation du rotor 1 par rapport au stator 3. Les aimants 4 à 7, la carcasse 8 et la bague 10 forment les moyens pour générer un courant électrique. Ils forment également un amortisseur électromagnétique. Cet amortisseur pourrait suffire à lui seul pour remplir la fonction d'amortissement du mouvement du rotor 1 par rapport au stator 3. Dans l'invention, l'amortisseur électromagnétique est volontairement sous dimensionné. Il n'apporte qu'une faible part de l'amortissement nécessaire, de l'ordre de quelques pourcents. Sa fonction principale est de générer un courant électrique proportionnel à la vitesse du rotor. Le courant est utilisé par ailleurs pour compléter l'amortissement.

A cet effet, le dispositif comporte en outre des moyens pour modifier des propriétés mécaniques d'un fluide situé entre le rotor 1 et le stator 3 en fonction du courant électrique. Avantageusement, la bague 10 comporte au moins un prolongement suivant l'axe 1 au-delà de la carcasse 8. Dans l'exemple représenté, la bague 10 comporte deux prolongements 20 et 21 s'étendant suivant l'axe 2, un de chaque coté de la carcasse 8. Les prolongements 20 et 21 forment chacun avec un anneau, respectivement 22 et 23, un interstice respectivement 24 et 25 dans lequel le fluide est situé. Les anneaux 22 et 23 sont solidaires du rotor 1. Les anneaux 22 et 23 sont de forme de révolution autour de l'axe 2. Dans un agencement particulier chaque anneau 22 et 23 comporte une rainure circulaire dans laquelle se glisse un prolongement 20 ou 21 de la bague 10. Les interstices 24 et 25 sont formés entre les parois internes des rainures et les prolongements 20 et 21. Ainsi, chaque interstice 24 ou 25 est double et cela permet d'augmenter les surfaces en regard de l'anneau 22 ou 23 avec le prolongement correspondant 20 ou 21. Si au contraire, on ne souhaite pas augmenter les surfaces en regard, cela permet, à surface équivalente, d'obtenir un repli de l'interstice associé 24 ou 25 et d'améliorer la compacité du dispositif.

Avantageusement, le fluide est un fluide magnéto-rhéologique et le courant électrique génère un champ magnétique dans le fluide. Le fluide utilisé comporte des particules magnétiques en suspension colloïdale dans un solvant tel que par exemple de l'eau ou de l'huile à base silicone. La présence de fluide dans les interstices 24 et 25 génère un couple résistant lors de la rotation du rotor 1. Le couple résistant ne serait fonction que de la viscosité du fluide si aucun courant ne circulait dans la bague 10. Or, la présence d'un courant circulant dans la bague 10 génère un champ magnétique dans les interstices 24 et 25. Suivant les lignes de champ, les particules magnétiques s'agglomèrent pour former des liaisons mécaniques entre un prolongement 20 ou 21 et l'anneau correspondant 22 ou 23. La raideur des liaisons mécaniques est fonction de l'intensité du champ magnétique, donc du courant circulant dans la bague 10 et donc de la vitesse de déplacement du rotor 1 par rapport au stator 3. Les prolongements 20 et 21, et les anneaux correspondants 22 et 23 forment un frein magnéto-rhéologique dont le couple résistant est fonction du cisaillement des liaisons mécaniques formées par l'agglomération des particules magnétiques. Pour obtenir une grande efficacité du dispositif d'amortissement, on cherche à générer dans la bague 10 des courants électriques les plus intenses possibles. Pour ce faire, la bague 10 est réalisée dans un matériau peu résistif tel que par exemple un alliage de cuivre.

Il serait également possible d'utiliser un fluide électro-rhéologique. Dans ce cas, l'agencement de l'interstice est tel que le fluide est soumis à un champ électrique généré par le courant électrique. Dans ce cas, pour améliorer l'efficacité du dispositif d'amortissement, il est nécessaire d'augmenter la tension entre la bague 10 et les anneaux 22 et 23. A cet effet, on pourra réaliser une bague 10 dans un matériau résistif ou remplacer la bague 10 par des enroulements dont des prolongements (semblables aux prolongements 20 et 21) sont formés par les chignons des enroulements. Il est bien entendu que l'utilisation d'enroulements est également possible en utilisant un fluide magnéto-rhéologique. On a néanmoins constaté que le temps de réponse d'un fluide magnéto-rhéologique était plus faible que celui d'un fluide électro-rhéologique. L'utilisation d'un fluide magnéto-rhéologique semble donc mieux adaptée à la réalisation d'un dispositif d'amortissement visqueux.

Avantageusement, Chaque interstice 24 et 25 s'ouvre sur un réservoir de fluide, respectivement 26 et 27, ménagé dans l'anneau correspondant 22 ou 23. Plus précisément, chaque réservoir est réalisé dans le fond de chaque rainure. Les réservoirs 26 et 27 permettent d'alimenter les interstices 24 et 25 en fluide en cas de pertes pratiquement inévitables lors d'un fonctionnement prolongé. L'existence des réservoirs 26 et 27 permet d'augmenter la masse de fluide et les surfaces d'échange thermiques entre le rotor 1 et le stator 3. Ainsi, l'énergie dissipée par les frottements peut facilement s'évacuer par l'axe 2 du rotor 1.

Avantageusement, au moins une zone 30 des anneaux 22 et 23 est traitée pour éviter que le fluide ne sorte de l'interstice correspondant 24 et 25. Dans l'exemple représenté, quatre zones 30 situées aux extrémités des parois des deux rainures sont traitées pour repousser le fluide vers l'interstice correspondant 23 et 24. Ce traitement est par exemple un traitement hydrofuge. Il permet de limiter les pertes de fluide lors d'une utilisation prolongée du dispositif d'amortissement.

Avantageusement, une distance notée « d » séparant les aimants permanents 4 à 7 et les anneaux 22 et 23 est définie de façon à limiter l'effet de lignes de fuite dans l'entrefer 9 sur le fluide. La distance d est mesurée suivant l'axe 2. En effet, en l'absence de mouvement du rotor 1, les lignes de champ formées par les aimants permanents 4 à 7 se referment par la carcasse et peuvent déborder de l'entrefer 9 jusqu'à croiser les interstices 24 et 25. Si le fluide est soumis à un-tel champ magnétique, même en l'absence de mouvement du rotor 1, le frein magnéto-rhéologique génère un couple résistant assimilable à un frottement sec généralement non souhaitable dans un dispositif d'amortissement.

Avantageusement, le dispositif comporte des moyens pour ajuster la modification des propriétés mécaniques du fluide en fonction de l'intensité du courant électrique. La distance d permet aussi d'ajuster la modification des propriétés mécaniques du fluide en fonction de l'intensité du courant électrique et par conséquent de régler l'amortissement du dispositif. Plus précisément, en augmentant la distance d, on réduit l'effet du courant sur le fluide et on réduit donc le couple résistant du frein magnéto-rhéologique. Une autre possibilité pour ajuster la modification des propriétés mécaniques du fluide consiste, dans le cas de mise en oeuvre d'enroulements à la place de la bague 10, à réaliser des connexions dans les enroulements. On peut par exemple disposer plusieurs enroulements et ouvrir le circuit de certains pour réduire l'amortissement du dispositif.

## Revendications

1. Dispositif d'amortissement du mouvement d'un équipage mobile (1) par rapport à un équipage fixe (3), le dispositif comportant des moyens (4 à 7, 8, 10) pour générer un courant électrique évoluant avec la vitesse de déplacement de l'équipage mobile (1) par rapport à l'équipage fixe (3), **caractérisé en ce qu'**il comporte en outre des moyens (20 à 25) pour modifier des propriétés mécaniques d'un fluide situé entre l'équipage mobile (1) et l'équipage fixe (3) au moyen du courant électrique et **en ce que** les moyens ( 4 à 7, 8, 10) pour générer un courant électrique comportent une génératrice comprenant un rotor (4 à 7) et un stator (8, 10), le rotor (4 à 7) étant solidaire de l'équipage mobile (1) et le stator (8, 10) étant solidaire de l'équipage fixe (3).

2. Dispositif selon la revendication 1, **caractérisé en ce que** le fluide est un fluide magnéto-rhéologique et **en ce que** le courant électrique génère un champ magnétique (11) dans le fluide.

3. Dispositif selon l'une des revendications précédentes, **caractérisé en ce que** le mouvement de l'équipage mobile (1) est un mouvement de rotation autour d'un axe (2).

4. Dispositif selon la revendication 3, **caractérisé en ce qu'**un premier équipage (1) comporte au moins un aimant permanent (4 à 7), **en ce que** le second équipage (3) comporte une carcasse magnétique (8), **en ce que** l'aimant (4 à 7) et la carcasse (8) sont séparés par un entrefer (9), **en ce qu'**une bague (10) réalisée en matériau amagnétique et conducteur électrique est disposée dans l'entrefer (9) solidairement de la carcasse (8).

5. Dispositif selon la revendication 4, **caractérisé en ce que** la bague (10) comporte au moins un prolongement (20, 21) suivant l'axe (2) au-delà de la carcasse (8), **en ce que** le prolongement (20, 21) forme avec un anneau (22, 23) solidaire du premier équipage (1) un interstice (24, 25) dans lequel le fluide est situé.

6. Dispositif selon la revendication 5, **caractérisé en ce que** l'anneau (22, 23) comporte une rainure circulaire dans laquelle se glisse le prolongement (20, 21) de la bague (10).

7. Dispositif selon l'une quelconque des revendications 6 ou 5, **caractérisé en ce que** l'interstice (24, 25) s'ouvre sur un réservoir (26, 37) de fluide ménagé dans l'anneau (22, 23).

8. Dispositif selon l'une quelconque des revendications 5 à 7, **caractérisé en ce qu'**au moins une zone de l'anneau (22, 23) est traitée pour éviter que le fluide ne sorte de l'interstice (24, 25).

9. Dispositif selon l'une quelconque des revendications 5 à 8, **caractérisé en ce qu'**une distance (d) séparant l'aimant permanent (4 à 7) et l'anneau (22, 23) est définie de façon à limiter l'effet de lignes de fuite dans l'entrefer (9) sur le fluide.

10. Dispositif selon l'une quelconque des revendications 5 à 9, **caractérisé en ce qu'**il comporte des moyens pour ajuster la modification des propriétés mécaniques du fluide en fonction de l'intensité du courant électrique.

## Claims

1. Device for damping the movement of a movable element (1) relative to a fixed element (3), the device comprising means (4 to 7, 8, 10) for generating an electric current changing with the speed of movement of the movable element (1) relative to the fixed element (3), **characterized in that** it also comprises means (20 to 25) for modifying the mechanical properties of a fluid situated between the movable element (1) and the fixed element (3) by means of the electric current and **in that** the means (4 to 7, 8, 10) for generating an electric current comprise a generator comprising a rotor (4 to 7) and a stator (8, 10), the rotor (4 to 7) being fixedly attached to the movable element (1) and the stator (8, 10) being fixedly attached to the fixed element (3).

2. Device according to Claim 1, **characterized in that** the fluid is a magnetorheological fluid and **in that** the electric current generates a magnetic field (11) in the fluid.

3. Device according to one of the preceding claims, **characterized in that** the movement of the movable element (1) is a movement of rotation about an axis (2).

4. Device according to Claim 3, **characterized in that** a first element (1) comprises at least one permanent magnet (4 to 7), **in that** the second element (3) comprises a magnetic casing (8), **in that** the magnet (4 to 7) and the casing (8) are separated by an air gap (9), **in that** a ring (10) made of amagnetic material and electrically conductive is placed in the air gap (9) fixedly attached to the casing (8).

5. Device according to Claim 4, **characterized in that** the ring (10) comprises at least one extension (20, 21) along the axis (2) beyond the casing (8), **in that** the extension (20, 21) forms, with a hoop (22, 23) fixedly attached to the first element (1), an interstice (24, 25) in which the fluid is situated.

6. Device according to Claim 5, **characterized in that** the hoop (22, 23) comprises a circular groove in which the extension (20, 21) of the ring (10) slides.

7. Device according to either of Claims 5 and 6,
**characterized in that** the interstice (24, 25) opens onto a reservoir (26, 27) of fluid made in the hoop (22, 23).

8. Device according to any one of Claims 5 to 7, **characterized in that** at least one zone of the hoop (22, 23) is treated to prevent the fluid from leaving the interstice (24, 25).

9. Device according to any one of Claims 5 to 8, **characterized in that** a distance (d) separating the permanent magnet (4 to 7) and the hoop (22, 23) is defined so as to limit the effect of leakage lines in the air gap (9) on the fluid.

10. Device according to any one of Claims 5 to 9, **characterized in that** it comprises means for adjusting the modification of the mechanical properties of the fluid according to the intensity of the electric current.

## Patentansprüche

1. Vorrichtung zum Dämpfen der Bewegung einer beweglichen Einrichtung (1) in Bezug auf eine feste Einrichtung (3), wobei die Vorrichtung Mittel (4 bis 7, 8, 10) enthält, um einen elektrischen Strom zu erzeugen, der sich mit der Verlagerungsgeschwindigkeit der beweglichen Einrichtung (1) in Bezug auf die feste Einrichtung (3) verändert, **dadurch gekennzeichnet, dass** sie außerdem Mittel (20 bis 25) enthält, um mechanische Eigenschaften eines Fluids, das sich zwischen der beweglichen Einrichtung (1) und der festen Einrichtung (3) befindet, mittels des elektrischen Stroms zu modifizieren, und dass die Mittel (4 bis 7, 8, 10) zum Erzeugen eines elektrischen Stroms einen Generator enthalten, der einen Rotor (4 bis 7) und einen Stator (8, 10) aufweist, wobei der Rotor (4 bis 7) mit der beweglichen Einrichtung (1) fest verbunden ist und der Stator (8, 10) mit der festen Einrichtung (3) fest verbunden ist.

2. Vorrichtung nach Anspruch 1, **dadurch gekennzeichnet, dass das** Fluid ein magnetorheologisches Fluid ist und dass der elektrische Strom in dem Fluid ein Magnetfeld (11) erzeugt.

3. Vorrichtung nach einem der vorhergehenden Ansprüche, **dadurch gekennzeichnet, dass** die Bewegung der beweglichen Einrichtung (1) eine Drehbewegung um eine Achse (2) ist.

4. Vorrichtung nach Anspruch 3, **dadurch gekennzeichnet, dass** eine erste Einrichtung (1) wenigstens einen Permanentmagneten (4 bis 7) enthält, dass die zweite Einrichtung (3) ein Magnetgestell (8) enthält, dass der Magnet (4 bis 7) und das Gestell (8) durch einen Luftspalt (9) getrennt sind und dass in dem Luftspalt (9) ein mit dem Gestell (8) fest verbundener Reif (10) angeordnet ist, der aus einem nichtmagnetischen und elektrisch leitenden Material hergestellt ist.

5. Vorrichtung nach Anspruch 4, **dadurch gekennzeichnet, dass** der Reif (10) wenigstens eine Verlängerung (20, 21) längs der Achse (2) über das Gestell (8) hinaus enthält und dass die Verlängerung (20, 21) mit einem mit der ersten Einrichtung (1) fest verbundenen Ring (22, 23) einen Zwischenraum (24, 25) bildet, in dem sich das Fluid befindet.

6. Vorrichtung nach Anspruch 5, **dadurch gekennzeichnet, dass** der Ring (22, 23) eine kreisförmige Rille aufweist, in der die Verlängerung (20, 21) des Reifs (10) gleitet.

7. Vorrichtung nach einem der Ansprüche 5 oder 6, **dadurch gekennzeichnet, dass** der Zwischenraum (24, 25) in einen Fluidvorratsbehälter (26, 27) mündet, der in dem Ring (22, 23) ausgebildet ist.

8. Vorrichtung nach einem der Ansprüche 5 bis 7, **dadurch gekennzeichnet, das** wenigstens eine Zone des Rings (22, 23) bearbeitet ist, um zu verhindern, dass das Fluid aus dem Zwischenraum (24, 25) austritt.

9. Vorrichtung nach einem der Ansprüche 5 bis 8, **dadurch gekennzeichnet, dass** ein Abstand (d), der den Permanentmagneten (4 bis 7) von dem Ring (22, 23) trennt, in der Weise definiert ist, dass die Wirkung von Kriechstrecken in dem Luftspalt (9) auf das Fluid begrenzt ist.

10. Vorrichtung nach einem der Ansprüche 5 bis 9, **dadurch gekennzeichnet, dass** sie Mittel enthält, um die Modifikation der mechanischen Eigenschaften des Fluids in Abhängigkeit von der Stärke des elektrischen Stroms einzustellen.
